(19) Europäisches Patentamt

European Patent Office

Office européen des brevets

(11) **EP 1 028 401 A2**

(12) **EUROPEAN PATENT APPLICATION**

(43) Date of publication:
16.08.2000 Bulletin 2000/33

(51) Int. Cl.⁷: **G07F 19/00**, G07F 7/08

(21) Application number: 00200448.9

(22) Date of filing: 10.02.2000

(84) Designated Contracting States:
**AT BE CH CY DE DK ES FI FR GB GR IE IT LI LU
MC NL PT SE**
Designated Extension States:
**AL LT LV MK RO SI**

(30) Priority: 12.02.1999 US 119818 P
21.07.1999 US 144927 P

(71) Applicant: **CITIBANK, N.A.**
**New York, New York 10043 (US)**

(72) Inventors:
• **Schutzer, Dan**
**New York 10583 (US)**

• **Slater, Alan**
**East Brunswick, New Jersey 08816 (US)**
• **Cirillo, Thomas**
**Greenwich, Connecticut 06830 (US)**
• **Derodes, Robert**
**Peachtree City, Georgia 30269 (US)**
• **Dancanet, Lucien**
**Los Angeles, Califonia 90045 (US)**

(74) Representative: **Hynell, Magnus**
**Hynell Patenttjänst AB,**
**Patron Carls väg 2**
**683 40 Hagfors/Uddeholm (SE)**

(54) **Method and system for performing a bankcard transaction**

(57) A method and system for performing a bank-card transaction provides a transaction card system for use, for example, on the Internet that allows a transaction card user to input authentication information to a transaction card issuer, which generates an anonymous or alternate card number and maintains a link between the anonymous or alternate card number and the transaction card user's transaction card number. An alternate aspect makes use, for example, of software on a local computing device, such as the transaction card user's personal computer or a point of sale terminal, which authenticates the transaction card user and generates the anonymous or alternate card number in sequence synchronization with the transaction card issuer's server.

FIG. 1

## Description

### Cross-Reference to Related Applications

This application claims priority to applicant's co-pending application having U.S. Serial No. 60/119,818 filed February 12, 1999 and applicant's co-pending application having U.S. Serial No. 60/144,927 filed July 21, 1999.

### Field of the Invention:

The present invention relates generally to the field of bankcard transactions and more particularly to a method and system for securely performing a bankcard transaction utilizing an anonymous or alternate card number.

### Background of the Invention

Transaction card transactions that occur over the Internet today utilizing the transaction card infrastructure are most commonly performed, for example, by a cardholder transmitting his or her credit or debit card number over an encrypted link, using a standard universally available web browser and server capability such as Secure Sockets Layer (SSL) to the merchant server. The link between the cardholder and the merchant must be encrypted to prevent the card number from being intercepted and fraudulently read by an unauthorized third party. This type of fraud is sometimes referred to as the man-in-the-middle attack. The link is encrypted so that no eavesdropper can listen in and steal the card number. However, this method has a number of disadvantages.

For example, the cardholder must trust the merchant with safeguarding the card number. This leaves the cardholder vulnerable to a risk of fraud by a merchant or its employees or a merchant who is honest but who is nevertheless negligent in maintaining the merchant's web site against break-ins. This risk is great enough to discourage customers from giving their card numbers to merchant web sites over the Internet whom they do not know or with whom they have no previous experience.

The particular risk is limited with credit cards and debit cards by consumer protection laws and association rules to a maximum exposure, such as $50 limit. Further, the cardholder has an opportunity, for example, with a credit card to dispute a charge before it is actually deducted from the cardholder's account. However, it is still a nuisance and a risk, and in the event of fraud, it may be necessary for the cardholder to be issued a new card and card number. The risk is greater with debit cards, because the limitation of liability is not as clear, and the charge is deducted from the cardholder's account before he or she is informed. Thus, with a debit card, the cardholder is placed in the position of having to dispute the deduction in order to regain his or her stolen funds.

Another disadvantage, for example, is that when a merchant accepts a card number from a customer over the Internet, the merchant has no way of authenticating that the customer making the purchase is the actual cardholder. The transaction is treated as a Mail Order/Telephone Order (MOTO) transaction, also known as a "card not present" transaction. In such a transaction, the merchant's transaction cost and exposure is much greater than when a customer is physically present at the point-of-sale. If the customer successfully disputes having made the transaction, the merchant payment is reversed by the card issuer.

These disadvantages provide incentives for a better approach to security for bankcard transactions from the standpoint of both cardholders and merchants, provided it is fast, simple and inexpensive. Many solutions have been proposed to address this need, most notably the Credit Card Association's standard specification, Secure Electronic Transaction (SET) protocol. A problem with solutions such as SET is that they impose a significant cost and performance penalty, requiring both cardholders and merchants to install special software and/or hardware that add significantly to transaction costs, in terms of both money and time.

### Summary of the Invention

It is a feature and advantage of the present invention to provide method and system for securely performing a bankcard transaction which affords all of the account number of security of the SET protocol as well as the ability to authenticate the customer, while maintaining the simplicity of sending a transaction card number over an encrypted link, such as SSL.

It is another feature and advantage of the present invention to provide a method and system for securely performing a bankcard transaction which eliminates transmitting the customer's actual card number over the Internet to the merchant and likewise eliminates the need for a secure link between the customer and the merchant.

It is a further feature and advantage of the present invention to provide a method and system for securely performing a bankcard transaction, such as a credit card or debit card transaction, that is fast and easy to implement and that requires little, if any, modification to the existing Internet infrastructure.

To achieve the stated and other features, advantages and objects, an embodiment of the present invention provides a method and system for securely performing an bankcard transaction in which a transaction card user receives an alternate or anonymous card number tat is not the user's actual card number but tat is designed, for example, to pass any validity checks made by a merchant or the merchant's bank. The alternate or anonymous card number can be used only once within a limited time period and cannot be copied and replayed. Upon receipt of the anonymous or alternate card number by the transaction card issuer, the anonymous card number can be associated by the card issuer with the proper cardholder and the cardholder's account can be authorized.

In an embodiment of the present invention, the transaction card user authenticates himself or herself, for example, to an authenticator of the transaction card issuer's server. The transaction card user can authenticate himself or herself, for example, by entering transaction card user information at a computing device, such as a personal computer, a personal digital assistant, or a smart card, coupled to the card issuer's server over a network, such as the Internet.

In addition, in an embodiment of the present invention, an electronic wallet application of the computing device can be utilized by the transaction card user for sending the transaction card user information to the transaction card issuer's server for user authentication. The transaction card user information includes, for example, one or more of a personal identification number, a password, a biometric sample, a digital signature or the transaction card number for the transaction card user, and the transaction card user information can be encrypted.

In an alternative aspect for an embodiment of the present invention, the transaction card user authenticates himself or herself with the transaction card user information at a local computing device, such as a personal computer, a personal digital assistant, or a smart card of the transaction card user. In this aspect, the transaction card user authenticates himself or herself on an application of the transaction card user's local computing device, such as an electronic wallet application, by entering the transaction card user information on the application at the local computing device.

In an embodiment of the present invention, when the transaction card user is authenticated by the transaction card issuer, a number generator of the transaction card issuer's server generates an anonymous card number for the transaction card user. However, in the alternative aspect in which the transaction card user authenticates himself or herself on an application of the transaction card user's local computing device, the anonymous card number is likewise generated at the local computing device, for example, by a number generating application of the local computing device which is synchronized with the number generator of the transaction card issuer's server.

The anonymous card number for an embodiment of the present invention is generated according to a number generating scheme, such as a random number generating algorithm, a random sequence generator, and/or a secure-hashing algorithm. Further, the anonymous card number is generated according to pre-defined parameters limiting its use to the particular transaction and/or for a predetermined time period.

In an embodiment of the present invention, the anonymous card number generated by the transaction card issuer is associated with a transaction card number of the transaction card user, for example, by linking the anonymous card number with the transaction card number by either or both of the number generator or the authorization processor of the transaction card issuer's server.

However, in the alternative aspect in which the anonymous card number is generated at the transaction card user's local computing device, the anonymous card number is linked with the transaction card number according to a pre-defined sequence synchronization between the number generator of the local computing device and the transaction card issuer's server.

In an embodiment of the present invention, the anonymous or alternate card number is used in a transaction by the transaction card user in place of the transaction card user's transaction card number. For example, the transaction card user sends the anonymous card number to the merchant, which in turn sends it to the merchant' bank with a request for authorization. The merchant's bank sends the anonymous card number over the card association network to the transaction card issuer. The transaction card issuer's authorization processor receives the anonymous card number linked with the transaction card number and sends an authorization back to the merchant via the card association network and the merchant's bank.

In another embodiment of the present invention, the anonymous or alternate card number is used in a transaction by the transaction card issuer after authenticating the user. For example, the transaction card user authenticates himself to the issuing bank, and the issuing bank sends the anonymous card number directly to the merchant which, in turn, sends it to the merchant's bank with a request for authorization.

In another embodiment of the present invention, the transaction card user authenticates himself to the transaction card issuer, and the transaction card issuer sends the anonymous card number, along with an authorization, directly to the merchant which, in turn, sends both the anonymous card number and the authorization to the merchant's bank for verification and processing. The transaction card user uses the actual transaction card number and the alternate card number for billing and communicating to its transaction card user, and the alternate card number and authorization number for settlement with the merchant bank and card processing network.

Additional objects, advantages and novel features of the invention will be set forth in part in the description which follows, and in part will become more apparent to those skilled in the art upon examination of the following or may be learned by practice of the invention.

## Brief Description of the Drawings

Fig. 1 is a schematic diagram which illustrates an overview of examples of key components and the flow of information between the key components for an embodiment of the present invention in which an anonymous or alternate card number is sent to a cardholder by a card issuer for use in an on-line bankcard transaction;

Fig. 2 is a flow chart which illustrates an example of the process of the cardholder performing a bankcard transaction using the anonymous or alternate card number which was sent to the cardholder by the card issuer for an embodiment of the present invention;

Fig. 3 is a schematic diagram which illustrates an overview of examples of key components and the flow of information between the key components for an embodiment of the present invention in which an anonymous or alternate card number is generated at the cardholder's computing device for use in an on-line bankcard transaction;

Fig. 4 is a flow chart which illustrates an example of the process of the cardholder performing a bankcard transaction using the anonymous or alternate card number which was generated at the cardholder's computing device for an embodiment of the present invention;

Fig. 5 is a schematic diagram which illustrates an overview of examples of key components and the flow of information between the key components for an embodiment of the present invention in which an anonymous or alternate card number is generated a point of sale for the cardholder; and

Fig. 6 is a diagram which illustrates a sample of a Linear Feedback Shift Register used to generate anonymous or alternate card numbers for an embodiment of the present invention.

## Detailed Description of the Invention

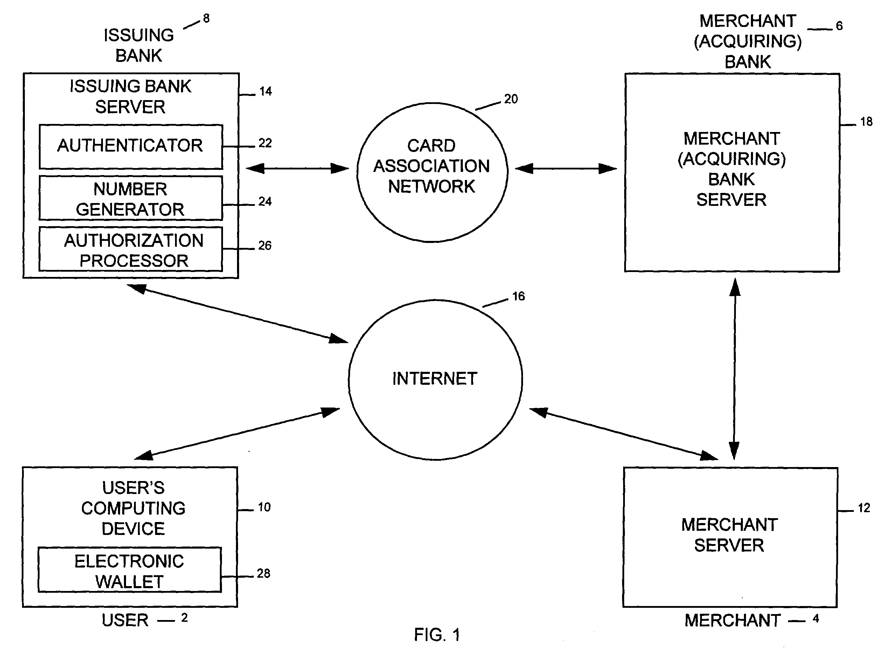

Referring now in detail to an embodiment of the invention, an example of which is illustrated in the accompanying drawings, Fig. 1 is a schematic diagram which illustrates an overview of examples of key components and the flow of information between the key components for an embodiment of the present invention in which an anonymous card number is sent to a cardholder by a card issuer for use in an on-line bankcard transaction. An embodiment of the present invention involves a number of entities, such as a cardholder 2, a merchant 4, a merchant (acquiring) bank 6, and a card issuer 8. An embodiment of the present invention also makes use, for example, of computer hardware and software, such as a cardholder's computing device 10, a merchant's website server 12, and a card issuer's server 14, each coupled over a network, such as the Internet 16, as well as a merchant (acquiring) bank server 18 coupled to the merchant server 12 and also coupled to the issuing bank server 14 over a card association network 20. In addition, the card issuer's server comprises, for example, an authenticator 22, an alternate card number generator 24, and an authorization processor 26.

In an embodiment of the present invention, the cardholder 2 receives an alternate card number (referred to herein as either "anonymous card number" or "alternate card number") from the cardholder's issuing bank 8 that is not the cardholder's actual card number. The anonymous card number is issued after the cardholder 2 authenticates himself or herself directly to the cardholder's card issuer 8. The anonymous card number is utilized only once within a limited period of time. It is designed to pass any validity checks made by the merchant 4 and the merchant's bank 6 and cannot be copied and replayed. Upon receipt of the anonymous card number for authorization, the anonymous card number can be associated by the issuing bank 8 with the proper cardholder 2 and the cardholder's account and can be authorized.

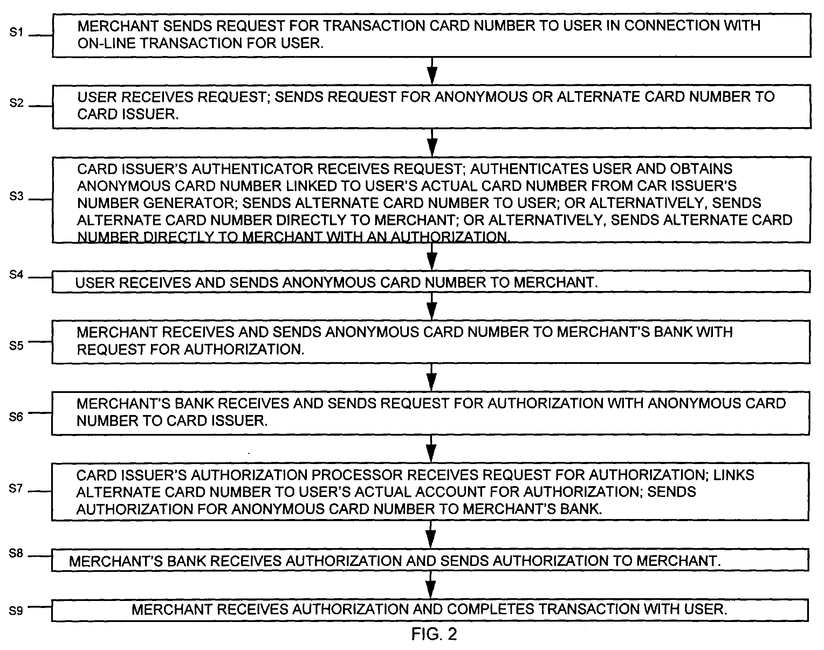

Fig. 2 is a flow chart which illustrates an example of the process of the user 2 performing a bankcard transaction using the anonymous or alternate card number for an embodiment of the present invention in which the anonymous card number is sent to the cardholder 2 by the card issuer 8. At S1, the merchant's server 12 sends a request over the Internet 16 to the user 2 at the user's computing device 10 for a transaction card number in connection with an on-line transaction for the user 2. At S2, the user 2 receives the request at the user's computing device 10 and sends a request over the Internet 16 to the card issuer's server 14 for an alternate card number. At S3, the card issuer's authenticator 22 receives the request, authenticates the user 2 and obtains an alternate card number linked to the user's actual card number from the card issuer's number generator 24, and sends the alternate card number over the Internet 16 to the user 2 at the user's computing device 10. At S4, the user 2 at the user's computing device 10 sends the alternate card number over the Internet 16 to the merchant' server 12.

Referring further to Fig. 2, in an embodiment of the present invention, at S5, the merchant's server 12 receives and sends the alternate card number to the merchant (acquiring) bank's server 18 with a request for authorization. At S6, the merchant (acquiring) bank's server 18 receives the request for authorization and sends the request with the alternate card number over the card association network 20 to the card issuer's server 14. At S7, the card issuer's authorization processor 26 receives the request for authorization, links the alternate card number to the user's actual account for authorization, and sends an authorization for the alternate card number to the merchant (acquiring) bank's server 18 over the card association network 20. At S8, the merchant (acquiring) bank's server 18 receives the authorization and sends it to the merchant's server 12. At S9, the merchant's server 12 receives the authorization and completes the transaction with the user 2.

Referring again to Fig. 2, in an embodiment of the present invention, the cardholder 2 authenticates himself or herself on-line over a secure (encrypted) line with the cardholder's issuing bank 8 at S2, utilizing, for example, an electronic wallet 28 as shown in Fig. 1. When the cardholder 2 is authenticated, he or she receives the anonymous card number over the same line at S3. Alternatively, at S3, the cardholder 2 can have the anonymous card number sent by the card issuer 8 directly to the merchant 4, in which case, it is not necessary for the cardholder 2 to send the anonymous card number to the merchant 4 at S4.

Referring once more to Fig. 2, in an embodiment of the present invention, the cardholder 2 authenticates himself or herself to the cardholder's issuing bank 8 by typing in his or her card number and a secret PIN or password or hash of a PIN or password at the user's computing device 10 and sending it over an encrypted link to the issuing bank 8 at S2. The encrypted link ensures that no third party can eavesdrop and steal the card number and PIN. The cardholder 2 can feel secure that the card number, PIN or password or hashed PIN or password are safe with the issuing bank 8, as the issuing bank 8 already knows and safeguards this information. Because the cardholder 2 authenticates himself or herself with a PIN or password, the issuing bank 8 can authenticate the cardholder 2 to the merchant 12. If the transaction or the customer's history warrants, the issuing bank 8 can require more secure authentication, such as additional secrets, matching biometrics, and/or digital signatures.

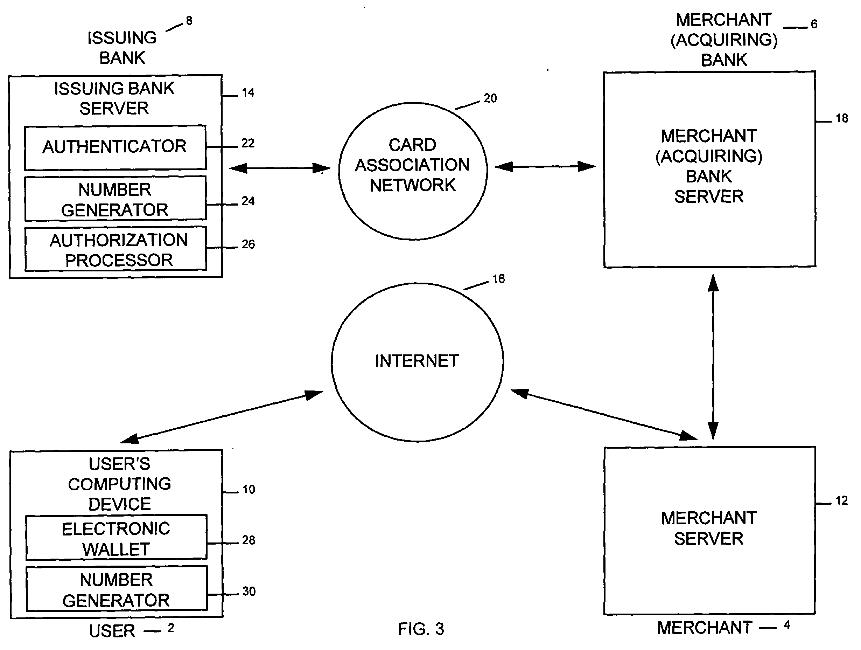

In an alternative aspect of an embodiment of the present invention, the issuing bank 8 can install software on the cardholder's PC or information appliance 10, such as a smart card or personal digital assistant (PDA) type computing device, that can generate the anonymous card number after the cardholder 2 identifies himself or herself to the software and/or appliance 10. Fig. 3 is a schematic diagram which illustrates an overview of an example key components and the flow of information between the key components for an alternate aspect of an embodiment of the present invention in which an anonymous card number is generated at the cardholder's computing device 10 in an on-line transaction. In this aspect, the card issuer 8 can install software 30 on the cardholder's computing device 10, which can be a personal computer (PC) or hardware token, such as a smartcard, that generates the anonymous card number locally upon authentication of the cardholder 2.

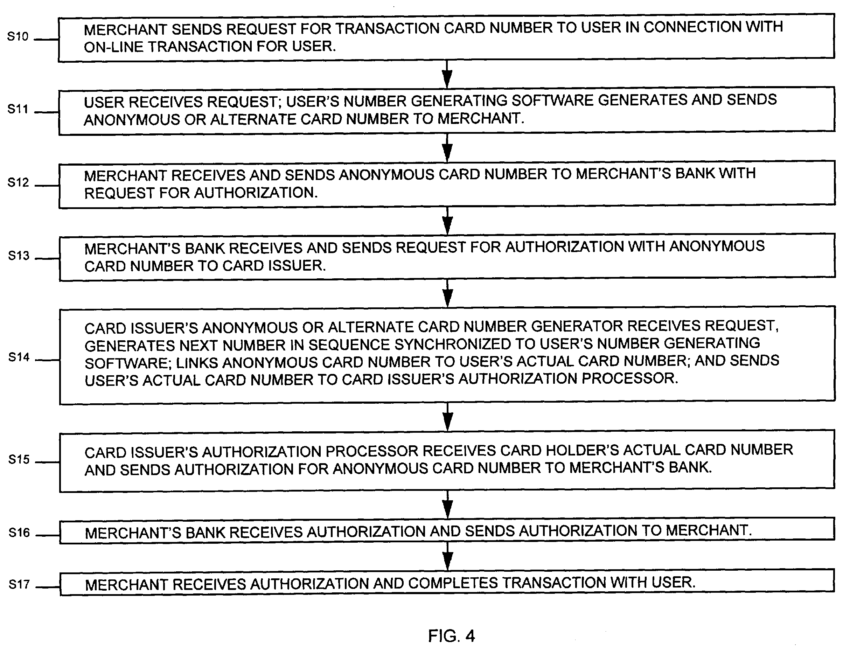

Fig. 4 is a flow chart which illustrates an example of the process of the user 2 performing a bankcard transaction for an embodiment of the present invention in which the anonymous card number is generated at the cardholder's computing device 10. Referring to Fig. 4, at S10 , the merchant server 12 sends a request for a transaction card number over the Internet 16 to the cardholder 2 at the cardholder's computing device 10. At S11, the cardholder 2 receives the request at the cardholder's computing device 10, and the number generating software 30 at the cardholder's computing device 10 generates and sends an alternate card number to the merchant's server 12. At S12, the merchant's server 12 receives the alternate card number and sends a request for authorization with the alternate card number to the merchant (acquiring) bank's server 18.

Referring further to Fig. 4, in an embodiment of the present invention, at S13, the merchant (acquiring) bank's server 18 receives the request and sends the request over the card association network 20 to the card issuer's server 14. At S14, the card issuer's alternate card number generator 24 receives the request, generates the next number in sequence synchronized to the cardholder's software 30, links the alternate card number to the cardholder's actual card number, and sends the cardholder's actual card number to the card issuer's authorization processor 26. At S15, the card issuer's authorization processor 26 receives the cardholder's actual card number and sends an authorization over the card association network 20 to the merchant (acquiring) bank's server 18. At S16, the merchant (acquiring) bank's server 18 receives the authorization and sends it to the merchant's server 12. At S17, the merchant's server 12 receives the authorization and completes the transaction with the user 2.

In another aspect of an embodiment of the present invention, the card issuer 8, such as a bank, provides an electronic wallet system, including, for example, an electronic wallet server. In this aspect, the issuing bank 8 matches the anonymous card number with the actual user account. If the electronic wallet generates an anonymous card number for the cardholder 2 for which the wallet server is not the issuing bank, then the anonymous card number is sent back to the wallet server for matching the anonymous card number with the actual user card number and for sending it to the issuing bank 8 for authorization. In this situation, the electronic wallet, in effect, performs an acquiring bank function.

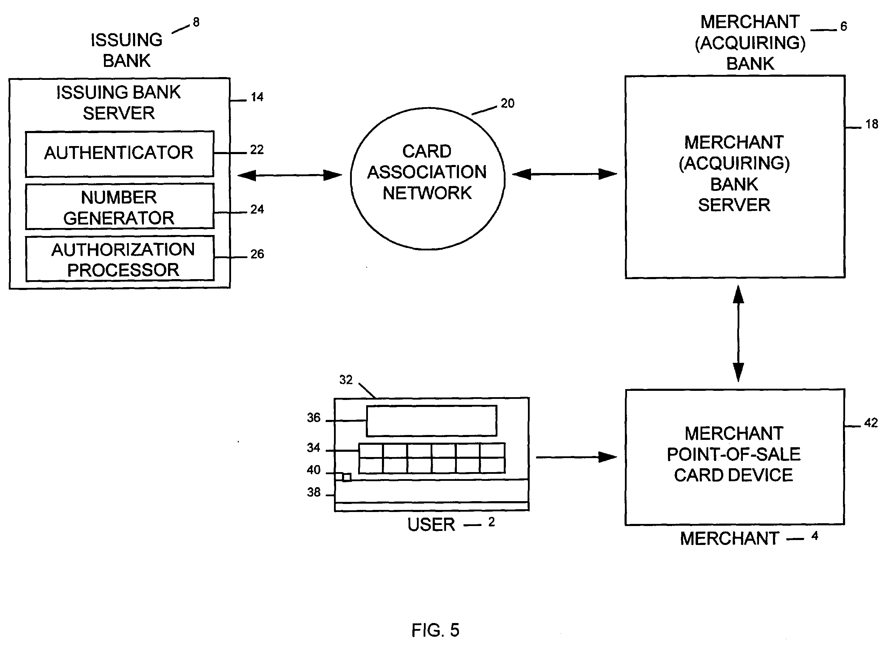

Another aspect of an embodiment of the present invention enables the cardholder 2 to perform a transaction, such as a purchase, at a physical point-of-sale without revealing the cardholder's true card number. Fig. 5 is a schematic diagram which illustrates an example of key components and the flow of information between the key components for an aspect of an embodiment of the present invention in which an alternate card number is generated at a point-of sale for a bankcard transaction. This aspect makes use, for example, of a card 32 with no embossed number but with an input device 34, such as a keypad, a display 36, such as a liquid crystal display (LCD), and a magnetic stripe 38 whose recording can be altered by an internal microprocessor 40 in the card. This aspect utilizes a point-of sale card device 42 coupled to the merchant (acquiring) bank's server 18, which is coupled over the card association network 20 to the card issuer's server 14.

Referring to Fig. 5, in the process of the user 2 performing a point-of-sale bankcard transaction for an embodiment of the present invention, the user 2 enters a password onto the input device 34, such as the keypad, or alternatively the user 2 enters a biometric, such as a fingerprint, onto the input device 34, such as a biometric input device. Upon entering the correct password or biometric onto the input device 34, the anonymous card number is displayed on the LCD 36 as the card number, and when the card 32 is dipped in the card device 42, the magnetic strip 38 outputs the anonymous card number. The remainder of the process for the point-of sale bankcard transaction is the similar to steps S11 through S17 of the process of the user performing an on-line bankcard transaction in which the anonymous number is generated at the user's computing device 10 illustrated in Fig. 4.

Alternatively, in the foregoing aspect of an embodiment of the present invention, when the card 32 is dipped in the card device 42, it can produce the actual number of the cardholder, but the display 36 shows an anonymous number. In this situation, a fraudulent merchant cannot read the cardholder's actual card number. The anonymous number that is displayed can be for a one-time use, in case the number is manually entered at the point of sale, but it cannot be copied and reused. In this case, a fraudulent merchant can conceivably obtain the cardholder's actual card number by skimming the magnetic strip 38, but properties of the magnetic strip 38 can be adjusted to make skimming and copying difficult. The same process can be used, for example, for a telephone order in which, after user activation and authentication, the cardholder's device 10 transmits an alternate card number through the telephone system to the merchant 4.

In an embodiment of the present invention, the assigned one-time use anonymous card number passes validation by the merchant 4 and the merchant's bank 6, because it has all the required digits in the proper position. The anonymous card number also has the proper routing digits to ensure that the transaction is sent to the correct issuing bank 8 for authentication and authorization approval. When the issuing bank 8 receives the number and requested charge for authorization, it sends the anonymous card number to a special front-end processor 24. The processor 24 can be implemented as a standalone hardware processor, or it can simply be, for example, a software module co-located inside the main authorization processor 26.

The front-end processor 24 for an embodiment of the present invention maintains a link between the actual card number and the generated anonymous card number and the time frame during which the link is valid. If a match occurs, and the anonymous card number has not already been used or expired, it is replaced with the actual card number and sent on to the normal card processing authorization system 26. Therefore, the requested transaction charge is authorized and linked to the cardholder's account by the cardholder's issuing bank 8 as long as the anonymous number matches the number provided by the issuing bank 8 or its hardware/software token 30 and as long as it has not already been used or passed the expiration period.

In an embodiment of the present invention, if the transaction is rejected, the cardholder 2 must go, for example, to a website of the cardholder's issuing bank 8 and request a new anonymous card number. The randomly selected anonymous card number is good only for one validation, and a new randomly selected number will not be assigned until the first randomly assigned number is either used or expires, whichever occurs first. Any receipts provided to the customer 2 must show the anonymous account number and the time of the transaction. The issuing bank 8 maintains the anonymous numbers and their links to true account numbers and the date and time of the transaction in order to investigate transactions disputed by the customer 2.

In the implementation of the method and system for an embodiment of the present invention, the anonymous or alternate card number is a number that is not the cardholder's actual card number. The issuing bank 8 associates the number with the cardholder's actual card number for one-time use over a limited time-duration, such as 15 to 30 minutes. The anonymous card number is generated by substituting new anonymous numbers for the actual numbers in selected positions of the cardholder's number.

There are a number of ways the anonymous card numbers are generated for an embodiment of the present invention. The generation of anonymous card numbers involves, for example, using a random number generation scheme with the additional requirement that the same number cannot be valid for more than one transaction during the same time period. Associated with the particular random number is the time that it was generated, along with a fixed period of time for which the number can be validly associated with the cardholder 2.

The assigned anonymous or alternate card number for an embodiment of the present invention can comprise, for example, 9 to 11 digits. For example, the ISO 7812 Identification Cards - Numbering System and Registration Procedure for issuer identifiers specifies that a valid card number consists of a bank identification number, plus an individual account identifier, plus a check digit. The bank identification number (BIN) is the first four or six digits of the number and is used for routing to the proper bank, such as the card issuer 8. The individual account identifier is a personal or individual number assigned by the card issuing institution 8 for purposes of identifying an individual account. The check digit is the checksum calculated from the rest of the number.

Most commonly issued credit card numbers comprise 16 digits. For example, a valid credit card number for a financial institution, such as issuing bank 8, can be AAAAAA XXXXXXXXX C, where AAAAAA represents the BIN and is fixed, XXXXXXXXX are nine arbitrarily assigned digits, and C represents the checksum and is calculated from the other digits. Thus, the card issuer 8 can arbitrarily set 9 or 11 of the 16 digits to any number for the one-time use, adjust the checksum to its new correct value, and the card number will check out as valid by the validation systems of the merchant 4 and the merchant's bank 6. A bank desiring to use this scheme must obtain a new BIN to be used exclusively for Internet transactions. This eliminates the need of preventing the issuance of a one-time use number that is duplicative of existing or hot-carded numbers.

Alternatively, in an embodiment of the present invention, the bank, such as issuing bank 8, can use an existing BIN by reserving one or more special digits in one or more specially designated positions to identify the card number as an anonymous card number, such as AAAAAA S XXXXXXXXX C, where S is the special symbol in designated position number seven. If there are already existing real card numbers with symbol S in position number 7, it is not possible to use these numbers as anonymous card numbers, and they must be rejected as valid anonymous card numbers by the anonymous number generator. In such case, the bank has only 8 or 10 digits available to assign an anonymous card number. Longer numbers can be generated if the card association standards are modified to allow longer bit streams, or if the participating financial institutions agree to accept these longer bit streams.

In an embodiment of the present invention, the assigned one-time use anonymous card number passes validation by the merchant 4 and merchant's bank 6 because it has all the required digits in the proper position. It is passed to the correct issuing bank 8 because the BIN is correct. The anonymous card number is correctly associated with the cardholder's actual card number by the cardholder's issuing bank 8, as long as it has not passed the expiration period. The cardholder's issuing bank 8 substitutes the cardholder's actual card number for the anonymous card number and passes the number along for normal authorization.

In an embodiment of the present invention, if the transaction is rejected because the anonymous card number does not pass the match test, the cardholder 2 must go to the web site of the cardholder's issuing bank 8 and request a new number. The assigned anonymous card number is good for only one validation. A new anonymous number will not be assigned until the first number is either used or expires. Any response back to the merchant 4 includes the anonymous card number.

In one aspect of an embodiment of the present invention, the anonymous or alternate card number is generated at the issuing bank server 14 and transmitted either directly to the merchant 4 or to the cardholder's PC or token 10 for relay to the merchant 4. However, in an alternate aspect of and embodiment of the present invention, the anonymous card number is generated locally at the cardholders PC or hardware device 10, such as a smart card, personal digital assistant (PDA) type device, or Security Dynamics type card. The local/client software 30 can be downloaded from the issuing bank server 8 or installed.

In an embodiment of the present invention, if the customer 2 or the customer's electronic wallet 28 is asked to re-present the alternate card number in case, for example, its transmission to the merchant 4 was not received or was received garbled, the alternate card number is resent unless it has already expired. If it has expired, a new alternate card number is generated and sent. If the authorization was completed the first time the alternate card number was presented, then it can be recognized as a duplicate charge by the merchant 4 if the alternate card number is the same, since there are two charges for the same amount with the same alternate card number. If the merchant 4 is sent a new alternate card number, then the customer 2 and his or her issuing bank 8 will recognize it, because the customer's credit card statement will reflect a double charge against the customer's actual card number, which was correctly substituted for the alternate card numbers both times.

In an embodiment of the present invention, if the merchant 4 receives the alternate card number but is asked by the merchant bank 6 to re-present, or if the merchant bank 6 is asked by the credit card network 20 to re-present, then the original alternate card number is re-presented, whether or not the alternate card number has already expired. If the alternate card number has expired, the transaction will not be approved, and the customer 2 or the customer's electronic wallet 28 is requested to send a new alternate card number, which it will do. If the alternate card number has expired or timed-out by the time it reaches the issuing bank 8 for authorization approval, the authorization is denied, and the customer 2 or the customer's electronic wallet 28 must resubmit.

In an embodiment of the present invention, if the card network 20 stands-in because the authorization by the issuing bank 8 takes too long, then the issuing bank 8 treats the charge as valid, just as it would in any other stand-in situation. The issuing bank 8 knows the actual card number with which the charge is associated, because the issuing bank 8 can match the alternate card number with the actual card number.

In an embodiment of the present invention, in order to handle any disputes, the issuing bank 8 maintains a log for each transaction of the merchant 4, with the amount, the alternate card number and the actual card number. The merchant 4 can trace the merchant's sale to the alternate card number, and the customer 2 can trace his or her purchase via the customer's actual card number. The issuing bank 8 can associate or match the two because it has a record of the alternate card number that is associated with the actual card number for the transaction. If the alternate card number is used for two transactions, the issuing bank 8 can spot that situation as well. In fact, if there is an attempt to use the same alternate card number twice for two different charges, the issuing bank 8 will deny the second attempt.

In an embodiment of the present invention, anonymous card numbers can be generated in several different ways. For example, the anonymous card number sequences can either be continuously generated at fixed time intervals or at each new request event. This can be achieved a number of ways, such as Security Dynamics algorithm, a random sequence generator, and a secure-hashing algorithm. If the issuing bank, such as card issuer 8, that assigns the anonymous card sequence is the same bank that validates it, there is no need to synchronize clocks.

In an embodiment of the present invention, if a number is generated that has already been assigned and has not yet expired, it will not be assigned, but a new number will be generated. The shorter the expiration period, and the more digits in the assigned number sequence, the less likelihood there is that such a conflict will occur. The anonymous number generator algorithm is designed to only issue new numbers that do not conflict with already issued and non-expired anonymous numbers or already assigned actual card numbers. This means it is designed to prevent the generation of a conflict or is capable of generating a new number within acceptable delays, not exceeding, for example, a couple of seconds, when a conflict does arise.

Alternatively, in an embodiment of the present invention, the issuing bank can run a number of anonymous number generators in parallel, so tat if one such generator generates a duplicate, a non-duplicate number can be obtained from one of the other number generators, or a batch of alternative numbers can be generated in advance from which the next alternative number can be selected. In an embodiment of the present invention, a single common number generator can be employed to service all cardholder's requests, or a different number generator can be dedicated to each active cardholder or to some subset of the total cardholder population.

In an embodiment of the present invention, the expiration interval is not so short that it expires before the cardholder 2 has time to send the sequence to the merchant 4 and have it processed and relayed through the merchant bank 6 back to the issuing bank 8. For this purpose, the expiration interval is at least, for example, about 15 minutes, but the expiration interval is adjustable to fit the application and situation. If a new card number sequence is assigned every second, 900 sequences must be generated every 15 minutes, and a typical sequence is 9 to 11 digits long. A 9-digit number generator is designed to produce 1 billion, or 10 to the ninth power, of non-duplicate sequences before it repeats, ensuring that it will not produce a repeat sequence within a 15 minute interval during which 900 sequences are generated.

An embodiment of the present invention makes use of any of a number of alternate card number generating algorithms. For example, Linear Congruential Generators are pseudo random sequence generators of the form:

$$X_n = (aX_{n1} + b) \bmod m$$

Where $X_n$ = nth number of the sequence, $X_{n1}$ = previous number of the sequence, a, b and m are constants where a is called the multiplier, b is called the increment and m is called the modulus. When a, b, and m are properly chosen, they can produce a pseudo-random sequence of maximal length, period m before they repeat themselves. Linear Congruential Generators are fast algorithms, but the output of a Linear Congruential Generator is not cryptographically secure. In other words, a cryptographer can, in a practical period of time, determine the next number of the sequence from examining past numbers in the sequence. Thus this algorithm can be vulnerable to attack.

However, with this algorithm for an embodiment of the present invention, an eavesdropper cannot obtain past numbers in the sequence when they are sent over encrypted lines. In that case, it would be necessary for the eavesdropper to collect the numbers at a merchant server, and these numbers may not be in sequential order at the particular merchant, since shoppers frequent a number of merchants in relatively random order. The cardholder can be prevented from collecting a sequence of alternate card numbers by selecting the alternate card number from a collection of alternate number generators used to supply numbers to multiple cardholders. This decreases the likelihood that a single eavesdropper can capture a sufficiently long sequence of anonymous numbers from a single anonymous number generator to enable reverse engineering.

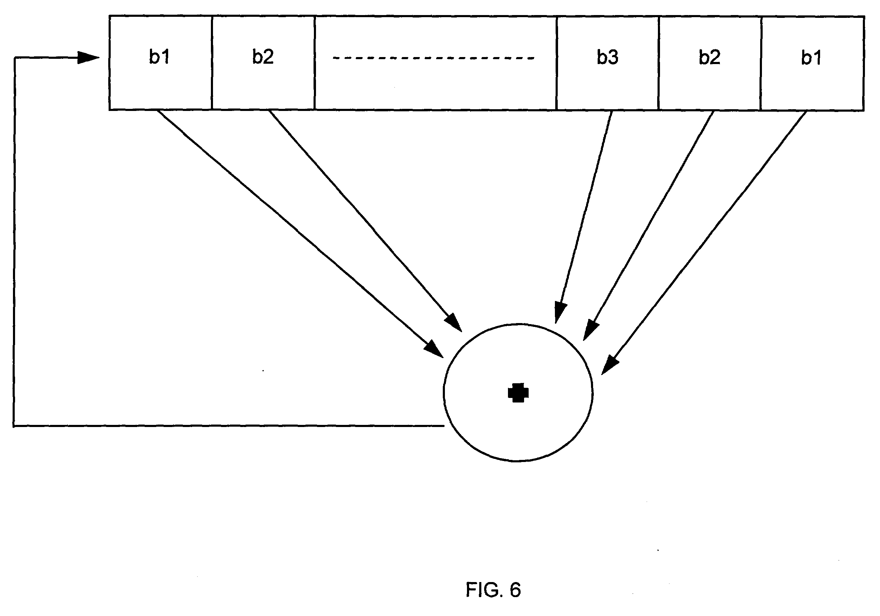

Linear Feedback Shift Registers can also be used to produce pseudo-random sequences of numbers for an embodiment of the present invention, and can be designed to be maximal length. Fig. 6 is a diagram which illustrates a sample Linear Feedback Shift Register for generating anonymous or alternate card numbers for an embodiment of the present invention. The Linear Feedback Shift Register is only one such method for generating a random number. Alternatively, a random number could be used as a seed to a cryptographic hash algorithim or digital signature algorithim for any of the other methods discussed below. Linear Feedback Shift Registers are also fast and also not cryptographically secure, but they can be combined to produce sequences that, although they cannot be proven to be cryptographically secure, are not known to have been broken. Examples include the "Bilateral Stop and Go Generator" and the "N Threshold Generator".

Another approach for an embodiment of the present invention employs a symmetric cryptographic algorithm known to be secure, such as RC4 by RSA Data Security, which requires more processing power. If the issuing bank server generates and matches the sequence, it is not necessary for the key to be shared or distributed. There is a certain degree of risk even when using cryptographic algorithms that are known to be secure. Over time, as computers grow in power, previously secure cryptographic algorithms can succumb to practical attacks. For example, 40-bit Data Encryption Standard (DES) is no longer considered secure against attacks, as today's affordable computers have been shown to have sufficient power to break this algorithm within reasonable timeframes in a matter of hours.

Another approach to generating anonymous or alternate card numbers for an embodiment of the present invention is to pick numbers in a sequence from tables of known truly random numbers, such as RAND tables. The actual selection of numbers from this table can be randomized using one of a number of techniques such as the ones described above. Alternatively, a random sequence can be generated from some actual random physical process, such as measuring keyboard latency, or electrical noise out of an electronic device.

In an embodiment of the present invention, pseudo-random numbers sequences can be made still further cryptographically secure by combining techniques, such as Linear Feedback Shift Register or symmetric algorithms to select numbers from a random number table, which are then cryptographically hashed with an algorithm such as Secure Hash Algorithm (SHA).

An aspect of an embodiment of the present invention also provides a general means of an agent authentication. For example, a user can authenticate himself or herself to the user's agent and receive an authenticating number. The authenticating number serves, for example, as a kind of one-time authentication token that is issued to the user and can be used to enable the user to authenticate himself or herself to any other service, without the need for additional passwords or secrets.

In another aspect of an embodiment of the present invention, since the alternate card number is generated on a per transaction basis, it can be used by the card processor, such as card issuer 8, to keep track of where (over what channel) and to whom (what merchant number was used). For example, if the request for an alternate number was requested at a wallet, such as the user's electronic wallet 28, over the Internet to be supplied to an Internet merchant, such as merchant 4, then the issuing bank 8 can identify and keep track of which purchases were made over the Internet and with which merchants. This information can be used for both fraud management and control purposes and for marketing purposes, such as special merchant promotions or promotions to customers for purchases made over the Internet. Similarly, it can be used to keep track of purchases made over the telephone and the like.

In another aspect of an embodiment of the present invention, when a server-based wallet, such as the user's electronic wallet 28, is used, it is technically possible for the wallet 28 to receive the merchant payment request form and not only to generate the alternate number, but also to pre-approve the purchase and to provide the merchant 4 with an alternate card number and an authorization code simultaneously. Although technically possible, it would be necessary to have such a process approved by the card association. However, if permitted, such a process has several advantages. From the merchant's perspective, for example, it saves the merchant the time required to make an authorization. Time is critical for transactions made over the Internet.

In an effort to make the shopping experience fast and convenient for users, many merchants actually take the credit card number and do not even attempt to obtain a credit authorization in real-time. Rather, they batch the transactions up and obtain authorizations after the fact. In that case, a merchant may find after the fact that the authorization was declined, and it becomes necessary for the merchant to get back in touch with a consumer. In the case of digital goods, knowledge of the denial may likely occur after the digital goods and services are already been distributed.

In the aspect in which the server-based wallet 28 also pre-approves the purchase and provides the merchant 4 with an alternate card number and authorization code simultaneously, in the bank's case, this authorization flow eliminates the risk of stand-in, in which the issuing bank, such as card issuer 8, is unable to get back fast enough, and the card association stands-in for the issuing bank 8 and automatically approves the transaction, with the issuing bank 8 still assuming the risk of collection.

Various preferred embodiments of the invention have been described in fulfillment of the various objects of the invention. It should be recognized that these embodiments are merely illustrative of the principles of the present invention. Numerous modifications and adaptations thereof will be readily apparent to those skilled in the art without departing from the spirit and scope of the present invention. Accordingly, the invention is only limited by the following claims.

## Claims

1.   A method for performing a transaction by a transaction card user, comprising:

authenticating the transaction card user;

generating an anonymous card number for the transaction card user;

associating the anonymous card number with a transaction card number of the transaction card user; and

authorizing the transaction with the anonymous card number for the transaction card user.

2. The method of claim 1, wherein authenticating the transaction card user further comprises authenticating the transaction card user by a transaction card issuer.

3. The method of claim 2, wherein authenticating the transaction card user further comprises authenticating the transaction card user by a server of the transaction card issuer.

4. The method of claim 2, wherein authenticating the transaction card user further comprises receiving transaction card user information by the transaction card issuer.

5. The method of claim 4, wherein receiving the transaction card user information further comprises receiving the information from the transaction card user.

6. The method of claim 5, wherein receiving the transaction card user information further comprises receiving the information at a computing device coupled to a server of the transaction card issuer.

7. The method of claim 6, wherein receiving the transaction card user information further comprises receiving the information by the transaction card issuer's server in encrypted form.

8. The method of claim 6, wherein receiving the transaction card user information further comprises receiving the information at the computing device coupled over a global network to the transaction card issuer's server.

9. The method of claim 6, wherein the computing device further comprises a personal computer.

10. The method of claim 9, wherein the computing device further comprises an electronic wallet application of the personal computer.

11. The method of claim 6, wherein receiving the transaction card user information further comprises receiving at least one of a personal identification number, a password, a biometric sample, a digital signature, and a transaction card number for the transaction card user.

12. The method of claim 1, wherein authenticating the transaction card user further comprises authenticating the transaction card user at a local computing device.

13. The method of claim 12, wherein the local computing device further comprises one of a personal computer, a personal digital assistant, and a smart card.

14. The method of claim 12, wherein authenticating the transaction card user further comprises authenticating the transaction card user by an application on the local computing device.

15. The method of claim 14, wherein the application of the local computing device further comprises an electronic wallet application.

16. The method of claim 12, wherein authenticating the transaction card user further comprises receiving transaction card user information by an application on the local computing device.

17. The method of claim 16, wherein the transaction card user information further comprises at least one of a personal identification number, a password, a biometric sample, a digital signature, and a transaction card number for the transaction card user.

18. The method of claim 1, wherein generating the anonymous card number further comprises generating the anonymous card number by a transaction card issuer.

19. The method of claim 18, wherein generating the anonymous card number further comprises generating the anonymous card number by a server of the transaction card issuer.

20. The method of claim 19, wherein generating the anonymous card number further comprises generating the anonymous card number by a number generator of the transaction card issuer's server.

21. The method of claim 1, wherein generating the anonymous card number further comprises generating the anonymous card number at a local computing device.

22. The method of claim 21, wherein generating the anonymous card number further comprises generating the anonymous card number by a number generating application on the local computing device.

23. The method of claim 22, wherein generating the anonymous card number further comprises generating the anonymous card number by the number generating application on the local computing device synchronized with a number generator of a transaction card issuer.

24. The method of claim 1, wherein generating the anonymous card number further comprises generating the anonymous card number according to pre-defined parameters limiting use of the anonymous card number exclusively to the transaction by the transaction card user.

25. The method of claim 1, wherein generating the anonymous card number further comprises generating the anonymous card number according to pre-defined parameters limiting use of the anonymous card number to a predetermined time period.

26. The method of claim 1, wherein generating the anonymous card number further comprises generating the anonymous card number according to a pre-selected number generating scheme selected from a group of schemes consisting of a random number generating algorithm, a random sequence generator, and a secure-hashing algorithm.

27. The method of claim 1, wherein associating the anonymous card number further comprises associating the anonymous card number with the transaction card user's transaction card number by a transaction card issuer.

28. The method of claim 27, wherein associating the anonymous card number further comprises associating the anonymous card number with the transaction card user's transaction card number by a server of the transaction card issuer.

29. The method of claim 28, wherein associating the anonymous card number further comprises linking the anonymous card number with the transaction card user's transaction card number by a number generator of the transaction card issuer's server.

30. The method of claim 29, wherein associating the anonymous card number further comprises linking the anonymous card number with the transaction card user's transaction card number by an authorization processor of the transaction card issuer's server.

31. The method of claim 1, wherein associating the anonymous card number further comprises linking the anonymous card number with the transaction card user's transaction card number according to a pre-defined sequence synchronization with a number generator of a local computing device.

32. The method of claim 31, wherein associating the anonymous card number further comprises linking the anonymous card number with the transaction card user's transaction card number by a server of a transaction card issuer.

33. The method of claim 1, wherein authorizing the transaction further comprises authorizing the transaction by a transaction card issuer.

34. The method of claim 33, wherein authorizing the transaction further comprises authorizing the transaction by an authorization processor of the transaction card issuer.

35. The method of claim 34, wherein authorizing the transaction further comprises receiving the anonymous card number linked to the transaction card user's transaction card number.

36. The method of claim 1, wherein authorizing the transaction further comprises sending the authorization with the anonymous card number to a merchant for the transaction card user.

37. A system for performing a transaction by a transaction card user, comprising:

means for authenticating the transaction card user;
means for generating an anonymous card number for the transaction card user;
means for associating the anonymous card number with a transaction card number of the transaction card user; and
means for authorizing the transaction with the anonymous card number for the transaction card user.

38. The system of claim 37, wherein the means for authenticating the transaction card user further comprises a server of a transaction card issuer.

39. The system of claim 38, wherein the means for authenticating the transaction card user further comprises a computing device coupled to the transaction card issuer's server for receiving transaction card user information.

40. The system of claim 39, wherein the means for authenticating the transaction card user further comprises means of at least one of the computing device and the transaction card issuer's server for encrypting the transaction card user's information.

41. The system of claim 40, further comprising the computing device coupled over a global network to the transaction card issuer's server.

**42.** The system of claim 41, wherein the computing device further comprises a personal computer.

**43.** The system of claim 42, wherein the computing device further comprises an electronic wallet application of the personal computer.

**44.** The system of claim 42, wherein the transaction card user's information further comprises at least one of a personal identification number, a password, a biometric sample, a digital signature, and a transaction card number for the transaction card user.

**45.** The system of claim 37, wherein the means for authenticating the transaction card user further comprises a local computing device.

**46.** The system of claim 45, wherein the local computing device further comprises one of a personal computer, a personal digital assistant, and a smart card.

**47.** The system of claim 46, wherein the means for authenticating the transaction card user further comprises an application on the local computing device.

**48.** The system of claim 47, wherein the means for authenticating the transaction card user further comprises an electronic wallet application of the local computing device.

**49.** The system of claim 45, wherein the means for authenticating the transaction card user further comprises an input device of the local computing device for receiving transaction card user information by an application on the local computing device.

**50.** The system of claim 49, wherein the transaction card user information further comprises at least one of a personal identification number, a password, a biometric sample, a digital signature, and a transaction card number for the transaction card user.

**51.** The system of claim 37, wherein the means for generating the anonymous card number further comprises a server of the transaction card issuer.

**52.** The system of claim 51, wherein the means for generating the anonymous card number further comprises a number generator of the transaction card issuer's server.

**53.** The system of claim 37, wherein the means for generating the anonymous card number further comprises a local computing device.

**54.** The system of claim 53, wherein the means for generating the anonymous card number further comprises a number generating application on the local computing device.

**55.** The system of claim 54, wherein the means for generating the anonymous card number further comprises the number generating application on the local computing device synchronized with a number generator of a transaction card issuer.

**56.** The system of claim 37, wherein the means for generating the anonymous card number further comprises means for generating the anonymous card number with pre-defined parameters limiting user of the anonymous card number exclusively to the transaction for by transaction card user.

**57.** The system of claim 37, wherein the means for generating the anonymous card number further comprises means for generating the anonymous card number with pre-defined parameters limiting use of the anonymous card number to a predetermined time period.

**58.** The system of claim 37, wherein the means for generating the anonymous card number further comprises means for generating the anonymous card number according to a pre-selected number generating scheme selected from a group of schemes consisting of a random number generating algorithm, a random sequence generator, and a secure-hashing algorithm.

**59.** The system of claim 37, wherein the means for associating the anonymous card number further comprises a server of a transaction card issuer.

**60.** The system of claim 59, wherein the means for associating the anonymous card number further comprise a number generator of the transaction card issuer's server.

**61.** The system of claim 60, wherein the means for associating the anonymous card number further comprises an authorization processor of the transaction card issuer's server.

**62.** The system of claim 37, wherein the means for associating the anonymous card number further comprises a number generator of a server of a transaction card issuer in a pre-defined sequence synchronization with a number generator of a local computing device.

**63.** The system of claim 37, wherein the means for authorizing the transaction further comprises a server of the transaction card issuer.

**64.** The system of claim 63, wherein the means for authorizing the transaction further comprises an authorization processor of the transaction card issuer's server.

**65.** The system of claim 37, wherein the means for authorizing the transaction further comprises means for sending an authorization for the transaction with the anonymous card number to a merchant for the transaction card user.

FIG. 1

EP 1 028 401 A2

| S1 | MERCHANT SENDS REQUEST FOR TRANSACTION CARD NUMBER TO USER IN CONNECTION WITH ON-LINE TRANSACTION FOR USER. |
|---|---|

| S2 | USER RECEIVES REQUEST; SENDS REQUEST FOR ANONYMOUS OR ALTERNATE CARD NUMBER TO CARD ISSUER. |
|---|---|

| S3 | CARD ISSUER'S AUTHENTICATOR RECEIVES REQUEST; AUTHENTICATES USER AND OBTAINS ANONYMOUS CARD NUMBER LINKED TO USER'S ACTUAL CARD NUMBER FROM CAR ISSUER'S NUMBER GENERATOR; SENDS ALTERNATE CARD NUMBER TO USER; OR ALTERNATIVELY, SENDS ALTERNATE CARD NUMBER DIRECTLY TO MERCHANT; OR ALTERNATIVELY, SENDS ALTERNATE CARD NUMBER DIRECTLY TO MERCHANT WITH AN AUTHORIZATION. |
|---|---|

| S4 | USER RECEIVES AND SENDS ANONYMOUS CARD NUMBER TO MERCHANT. |
|---|---|

| S5 | MERCHANT RECEIVES AND SENDS ANONYMOUS CARD NUMBER TO MERCHANT'S BANK WITH REQUEST FOR AUTHORIZATION. |
|---|---|

| S6 | MERCHANT'S BANK RECEIVES AND SENDS REQUEST FOR AUTHORIZATION WITH ANONYMOUS CARD NUMBER TO CARD ISSUER. |
|---|---|

| S7 | CARD ISSUER'S AUTHORIZATION PROCESSOR RECEIVES REQUEST FOR AUTHORIZATION; LINKS ALTERNATE CARD NUMBER TO USER'S ACTUAL ACCOUNT FOR AUTHORIZATION; SENDS AUTHORIZATION FOR ANONYMOUS CARD NUMBER TO MERCHANT'S BANK. |
|---|---|

| S8 | MERCHANT'S BANK RECEIVES AUTHORIZATION AND SENDS AUTHORIZATION TO MERCHANT. |
|---|---|

| S9 | MERCHANT RECEIVES AUTHORIZATION AND COMPLETES TRANSACTION WITH USER. |
|---|---|

FIG. 2

FIG. 3

EP 1 028 401 A2

S10 — MERCHANT SENDS REQUEST FOR TRANSACTION CARD NUMBER TO USER IN CONNECTION WITH ON-LINE TRANSACTION FOR USER.

S11 — USER RECEIVES REQUEST; USER'S NUMBER GENERATING SOFTWARE GENERATES AND SENDS ANONYMOUS OR ALTERNATE CARD NUMBER TO MERCHANT.

S12 — MERCHANT RECEIVES AND SENDS ANONYMOUS CARD NUMBER TO MERCHANT'S BANK WITH REQUEST FOR AUTHORIZATION.

S13 — MERCHANT'S BANK RECEIVES AND SENDS REQUEST FOR AUTHORIZATION WITH ANONYMOUS CARD NUMBER TO CARD ISSUER.

S14 — CARD ISSUER'S ANONYMOUS OR ALTERNATE CARD NUMBER GENERATOR RECEIVES REQUEST, GENERATES NEXT NUMBER IN SEQUENCE SYNCHRONIZED TO USER'S NUMBER GENERATING SOFTWARE; LINKS ANONYMOUS CARD NUMBER TO USER'S ACTUAL CARD NUMBER; AND SENDS USER'S ACTUAL CARD NUMBER TO CARD ISSUER'S AUTHORIZATION PROCESSOR.

S15 — CARD ISSUER'S AUTHORIZATION PROCESSOR RECEIVES CARD HOLDER'S ACTUAL CARD NUMBER AND SENDS AUTHORIZATION FOR ANONYMOUS CARD NUMBER TO MERCHANT'S BANK.

S16 — MERCHANT'S BANK RECEIVES AUTHORIZATION AND SENDS AUTHORIZATION TO MERCHANT.

S17 — MERCHANT RECEIVES AUTHORIZATION AND COMPLETES TRANSACTION WITH USER.

FIG. 4

EP 1 028 401 A2

FIG. 5

EP 1 028 401 A2

EP 1 028 401 A2

FIG. 6